# EUROPEAN PATENT SPECIFICATION

(11) **EP 0 605 601 B1**
(45) Date of publication and mention of the grant of the patent: **18.12.1996**
(21) Application number: 92920846.0
(22) Date of filing: 17.09.1992
(51) Int. Cl.: B63B 5/24

(54) **A SINGLE SKIN CONSTRUCTION METHOD FOR BUILDING A VESSEL**
VERFAHREN ZUR HERSTELLUNG EINES EINWANDIGEN SCHIFFRUMPFES
PROCEDE DE REALISATION D'UN BORDE SIMPLE POUR LA CONSTRUCTION D'UN NAVIRE

(30) Priority: 27.09.1991 NO 913801
(43) Date of publication of application: 13.07.1994
(73) Proprietor: KVAERNER MANDAL A.S., 4500 Mandal (NO)
(72) Inventor: SKOMEDAL, Nere, Vägsbygd (NO); FALCH, Sigurd, N-4500 Mandal (NO)
(74) Representative: Onn, Thorsten
(86) International application number: NO9200153
(87) International publication number: WO9305999

(56) References cited:
- GB-A- 1 578 534
- US-A- 3 093 847
- US-A- 3 593 354
- US-A- 3 832 745

## Description

A method for building vessels constructed of an inner structure and a skin consisting of several layers which together form a single laminate. The method may be used for constructing vessels of different shapes and sizes.

Other methods for constructing boats are previously known: US Patent 3832745 describes a method wherein a single whole mould is used for construction the hull. The disadvantage with this method is that the mould has a constant dimension, so that only vessels of the same size can be produced. The preparation of moulds of this kind is expensive and time-consuming, and this method requires therefore the mass production of boats in order to be economically viable. British Patent 1578534 describes a construction method wherein regular, profiled materials are used to form the hull and upon which reinforced plastics material is applied. Also this method is time consuming and expensive, producing vessels of the same size. US Patent 3593354 describes a sandwich construction with a frame which may be removed. This method is restricted, in the main, to lightweight boats. US Patent 2758321 makes use of a reinforced plastic structure for the hull, and an inner support structure (ribs) which are fixed in the hull during the entire construction process.

The advantages of the method in the present invention in comparison to the aforementioned methods are that the invention provides a more flexible and economically favourable method. In the method in the invention a prepared mould is not used, but the inner support structure of the vessel is used as a mould. Thus, there is great flexibility with regard to, for example, the length and shape of the hull. The method is therefore particularly suitable for building vessels in small series.

According to the invention, the method of building vessels which are constructed of an inner structure and a skin consisting of several layers which together constitute a single laminate, is characterized in that
(i) the inner structure is built first;
(ii) an auxiliary structure that essentially consists of thin plates is attached thereto in such a way that together they form a mould for the skin;
(iii) the skin is laminated on the outside of said mould;
(iv) the mould and the skin are separated;
(v) the auxiliary structure is removed from the inner structure;
(vi) the inner structure and the skin are joined.

The method is further characterized in that said mould is divided into sections to that steps (iv) to (vi) of the method described in claim 1 take place section by section.

The method is still further characterized in that the building of the inner structure, the application of the thin skin plate and the lamination of the skin take place whilst the vessel is upside down.

The invention will be explained in detail with reference to the drawings where:

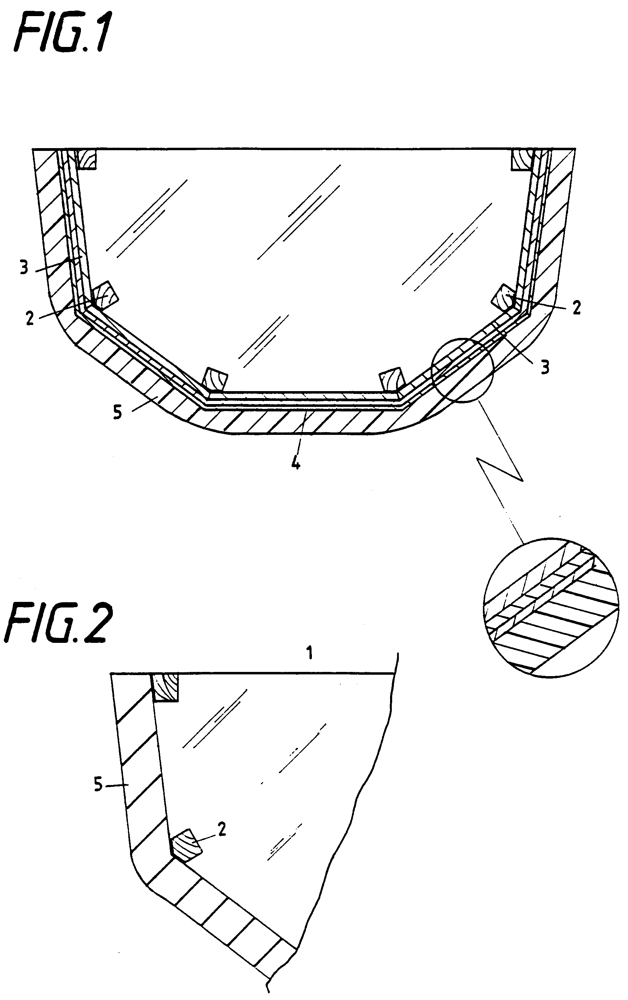

**Figure 1** shows the inner structure which consists of transverse ribs and longitudinal braces on to which is applied a thin plate of the desired shape, a slip film and skin.
**Figure 2** depicts a completed hull where the thin plate and the slip film have been removed and the skin has been attached to the inner structure.

The inner structure consists of longitudinal braces (2) which are mounted on transverse ribs (1).

Thin plates (3) are laid between the longitudinal braces, said plates preferably being glass fibre reinforced. Initially the plates are flat and are bent into the right shape when they are attached to the inner structure. Spacers may be positioned between the transverse ribs (1) in order to maintain the correct shape of the plates. A foil/slip film (4) is placed over these plates and shall ensure that the skin releases after moulding. The actual skin laminates (5), of the desired quality and thickness, are placed on the mould.

Once the skin laminates have been cured, the mould (braces (2) and the thin plate (3)) and the skin laminate (5) are separated. First the this plates are removed, and thereafter the inner structure is joined to the skin laminate (5).

The entire method in the invention takes place preferably in that the work is carried out section by section in the hull, and whilst the vessel is upside down.

## Claims

1. A method for building vessels constructed for an inner structure and a skin consisting of several layers with together form a single laminate, **characterized** in that
(i) the inner structure is built first;
(ii) an auxiliary structure that essentially consists of thin plates is attached thereto in such a way that together they form a mould for the skin;
(iii) the skin is laminated on the outside of said mould;
(iv) the mould and the skin are separated;
(v) the auxiliary structure is removed from the inner structure;
(vi) the inner structure and the skin are joined.

2. A method according to claim 1, **characterized** in that said mould is divided into sections to that steps (iv) to (vi) of the method described in claim 1 take place section by section.

3. A method according to any one of the preceding claims 1 to 2, **characterized** in that the building of the inner structure, the application of the thin skin plate and the lamination of the skin take place whilst the vessel is positioned upside down.

## Patentansprüche

1. Verfahren zur Herstellung eines aus einer Innenkonstruktion und einer Außenwand aufgebauten Schiffsrumpfes, wobei die Außenwand aus mehr mehreren Schichten besteht, die zusammen ein einziges Laminat bilden,
dadurch **gekennzeichnet,** daß
(i) die Innenkonstruktion zuerst aufgebaut wird;
(ii) eine im wesentlichen aus dünnen Platten bestehende Hilfskonstruktion derart daran angebracht wird, daß sie zusammen ein Formstück für die Außenwand bilden;
(iii) die Außenwand außen auf das Formstück laminiert wird;
(iv) das Formstück und die Außenwand getrennt werden;
(v) die Hilfskonstruktion von der Innenkonstruktion entfernt wird;
(vi) die Innenkonstruktion und die Außenwand verbunden werden.

2. Verfahren nach Anspruch 1,
dadurch **gekennzeichnet,**
daß das Formstück in Abschnitte unterteilt ist, so daß die Schritte (iv) bis (vi) des in Anspruch 1 beschriebenen Verfahrens abschnittweise durchgeführt werden.

3. Verfahren nach einem der Ansprüche 1 bis 2,
dadurch **gekennzeichnet,**
daß der Aufbau der Innenkonstruktion, das Anbringen der dünnen Außenwandplatte: und die Laminierung der Außenwand bei auf dem Kopf stehenden Schiffsrumpf vorgenommen werden.

## Revendications

1. Procédé de construction de navires comportant une structure interne et un bordé constitué de plusieurs couches qui forment ensemble un stratifié unique, caractérisé en ce que :
(i) on commence par construire la structure interne
(ii) une structure auxiliaire constituée essentiellement de plaques fines est fixée à cette structure interne de manière à former ensemble un moule pour le bordé ;
(iii) le bordé est stratifié sur la face externe du moule ;
(iv) le moule et le bordé sont séparés ;
(v) la structure auxiliaire est enlevée de la structure interne ;
(vi) la structure interne et le bordé sont raccordés.

2. Procédé selon la revendication 1 caractérisé en ce que ledit moule est divisé en sections de manière que les étapes (iv) à (vi) du procédé décrit dans la revendication 1 soient effectuées section par section.

3. Procédé selon l'une quelconque des revendications 1 à 2 caractérisé en ce que la réalisation de la structure interne l'application de la plaque de bordé mince et la stratification du bordé sont réalisées alors que le navire est positionné sens dessus dessous.
